# EUROPEAN PATENT SPECIFICATION

(11) **EP 0 556 799 B1**
(45) Date of publication and mention of the grant of the patent: **12.06.1996**
(21) Application number: 93102475.6
(22) Date of filing: 17.02.1993
(51) Int. Cl.: A43B 5/00, B29C 45/16

(54) **Sports footgear**
Sportschuh
Chaussure de sport

(30) Priority: 18.02.1992 IT PD920011 U
(43) Date of publication of application: 25.08.1993
(73) Proprietor: CALZATURIFICIO PIVA S.r.l., I-31041 Cornuda (Trevisio) (IT)
(72) Inventor: Bonora, Gianluca, I-31010 Maser (Treviso) (IT)
(74) Representative: Modiano, Guido, Dr.-Ing.

(56) References cited:
- EP-A- 0 212 032
- WO-A-83/03338
- DE-A- 3 542 959
- FR-A- 2 068 311
- US-A- 3 480 704

## Description

The present invention relates to sports footgear.

Among winter sports, snowboarding is becoming increasingly popular; this sport uses a snowboard, which is merely a particular type of single ski with a wide deck on which the feet are fixed in a substantially transverse position.

Particular items of footgear, substantially constituted by a shell of plastic material with a boot-shaped upper, have recently been devised for this kind of sport.

The external structure contains a removable innerboot made of soft material such as those used for ski boots.

The upper is made of rather rigid material which does not allow, particularly in the rear region where the heel and the cuff join, to provide marked contours and considerably limits the flexing movements of the leg with respect to the foot.

The fact that the rear contour cannot be increased entails that the profile of the heel cannot be much more inclined than the profile of the cuff.

This makes the innerboot tend to slip out during use, making the foot unstable with respect to the item of footgear and thus to the implement.

It should also be noted that footgear currently in use have a front opening which is closed by laces and arranged symmetrically with respect to its vertical center plane.

This entails that certain lateral flexing movements, typical of this sport, are somewhat hindered.

(Walking boots are known from the prior documents EP-A-212 032 and DE-A-3 542 959, the latter having the features of the preamble of claim 1.)

The aim of the present invention is to provide sports footgear, particularly suitable for snowboarding, which eliminates the drawbacks described above in known types.

A consequent primary object is to provide an item of sports footgear which is qualitatively better than current ones suitable for the same use.

Another important object is to provide an item of sports footgear which, despite keeping the foot stably secured to the implement, facilitates the flexing movements which are typical of snowboarding.

Another object is to provide sports footgear which can be manufactured at low cost with conventional equipment and facilities.

This aim, these objects and others which will become apparent hereinafter are achieved by sports footgear, according to the present invention, having the combination of features set forth in claim 1.

Further characteristics and advantages of the present invention will become apparent from the detailed description of an embodiment thereof, illustrated only by way of non-limitative example in the accompanying drawings, wherein:
figure 1 is a front perspective view of the item of footgear according to the present invention;
figure 2 is a rear view of the item of footgear of figure 1;
figures 3 and 4 are respective side views of the item of footgear of figure 1;
figure 5 is a view of the tread sole of the item of footgear of figure 1.

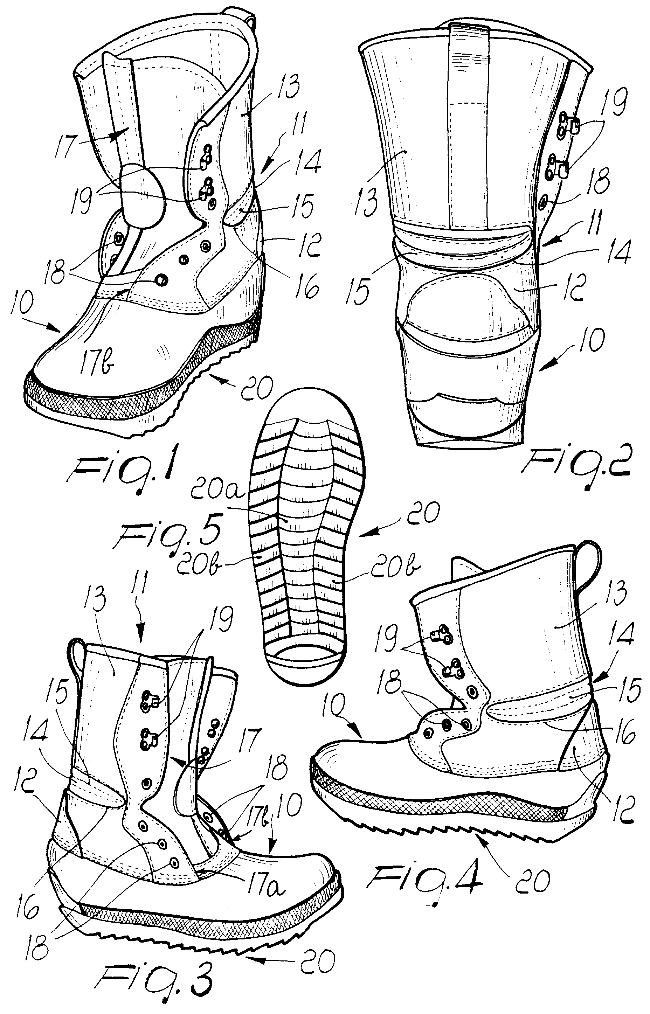

With reference to the above figures, an item of sports footgear, particularly for snowboarding, has a structure which comprises a shell 10 made of plastic material with an upper 11 stitched onto it and containing a removable innerboot, not shown in the figures, made of a soft material.

The upper is shaped like a boot and is made of leather or an equivalent material which has a certain rigidity and consistency.

In the region where the heel 12 and the cuff 13 join, the upper 11 is interrupted by a resilient element 14 which is appropriately padded and defines a sort of bellows which is suitable to facilitate the flexing of the leg with respect to the foot.

The element 14 is conveniently provided with longitudinal stitches 15 and is associated with the upper 11 by means of stitches 16 arranged at the region where said upper is cut.

It should be noted that in this manner it has been possible to obtain a footgear whereby the rear upper part of the heel area is more inclined than the rear part of the cuff, so that when the item of footgear is put on and closed, it clings more to the foot and so that it is practically impossible for the innerboot to slip out as a consequence of movements.

Another particularity of the item of footgear resides in that the front opening 17, with the eyelets 18 and the hooks 19 for the fastening 21, is asymmetrical with respect to the vertical center plane of said item of footgear.

In particular, the lower part of the opening 17 17a, 17b is sharply inclined toward the side of the item of footgear toward which the leg flexes with respect to the foot during use.

A final characteristic resides in the fact that the tread sole 20 is produced by means of two successive injections of plastic material in a mold: an injection of a more rigid material, suitable to form the central part 20a of said sole, and an injection of more flexible material, suitable to form the perimetric parts 20b.

Practical tests have shown that the intended aim and objects of the present invention have been achieved.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Sports footgear of the type which has a shell (10) and an upper (11), said footgear comprising a heel area (12) extending up to a flexing region of a user's leg with respect to its foot, a cuff (13), and a resilient element (14), said resilient element (14) being located at said flexing region where said cuff (13) and said heel area (12) meet, said footgear being characterized in that it is shaped as a boot and comprises a removable innerboot made of soft material, and in that the rear upper part of said heel area (12) is more inclined than the rear part of said cuff (13), whereby upon closing said footgear, said innerboot is prevented from slipping out.

2. Sports footgear according to claim 1, characterized in that said resilient element (14) is made of a soft material which defines a sort of bellows.

3. Sports footgear according to one or more of the preceding claims, characterized in that said cuff (13) is made of leather or of an equivalent material having a certain rigidity and consistency.

4. Sports footgear according to one or more of the preceding claims, characterized in that the front opening (17) for the fastening is asymmetrical with respect to the vertical center plane.

5. Sports footgear according to one or more of the preceding claims, characterized in that said front opening has a lower part which is markedly directed toward one side of the item of footgear.

6. Sports footgear according to one or more of the preceding claims, characterized in that the tread sole (20), produced by successive injections of plastic material in a mold, has a rigid internal region (20a) and flexible perimetric regions (20b).

## Patentansprüche

1. Sportschuh von der Art mit einer Schale (10) und einem Schaft (11), wobei der Schuh umfaßt: einen Fersenbereich (12), der sich nach oben zu einem Abwinkelbereich des Beines des Benutzers relative zu seinem Fuß erstreckt, einen Schaftteil (13) und ein federndes Element (14), wobei das federnde Element (14) in dem Abwinkelbereich angeordnet ist, wo der Schaftteil (13) und der Fersenbereich (12) zusammentreffen, wobei der Schuh dadurch gekennzeichnet ist, daß er als Stiefel geformt ist und einen entfernbaren Innenstiefel aus weichem Material aufweist, und dadurch, daß der hintere obere Teil des Fersenbereichs (12) stärker geneigt ist als der hintere Teil des Schaftteils (13), wodurch nach Schließen des Schuhs der Innenstiefel am Herausrutschen gehindert ist.

2. Sportschuh nach Anspruch 1, dadurch gekennzeichnet, daß das federnde Element (14) aus einem weichen Material gebildet ist, das eine Art Blasebalg definiert.

3. Sportschuh nach einem oder mehreren der vorhergehenden Ansprüche, dadurch gekennzeichnet, daß der Schaftteil (13) aus Leder hergestellt ist oder aus einem äquivalenten Material mit einer gewissen Steifheit und Konsistenz.

4. Sportschuh nach einem oder mehreren der vorhergehenden Ansprüche, dadurch gekennzeichnet, daß die vordere Öffnung (17) zum Schließen in Bezug auf die vertikale Zentralebene asymmetrisch ist.

5. Sportschuh nach einem oder mehreren der vorhergehenden Ansprüche, dadurch gekennzeichnet, daß die vordere Öffnung einen unteren Teil besitzt, der deutlich zu einer Seite des Sportschuhs gerichtet ist.

6. Sportschuh nach einem oder mehreren der vorhergehenden Ansprüche, dadurch gekennzeichnet, daß die Laufsohle (20), hergestellt durch aufeinanderfolgende Einspritzungen von Kunststoffmaterial in eine Gießform, einen starren Innenbereich (20a) und flexible Randbereiche (20b) aufweist.

## Revendications

1. Chaussure de sport du type comportant une coque (10) et une partie supérieure (11), ladite chaussure comprenant une région de talon (12) s'étendant jusqu'à une région de flexion de la jambe de l'utilisateur par rapport à son pied, un revers (13), et un élément élastique (14) situé au niveau de ladite région de flexion où se rencontrent ledit revers (13) et ladite région de talon (12), ladite chaussure étant caractérisée en ce qu'elle est conformée en botte et comprend une botte intérieure retirable faite d'une matière souple, et en ce que la partie arrière supérieure de ladite région de talon (12) est plus inclinée que la partie arrière dudit revers(13), moyennant quoi on empêche la botte intérieure de s'échapper en glissant lors de la fermeture de ladite chaussure.

2. Chaussure de sport selon la revendication 1, caractérisée en ce que ledit élément élastiqe (14) est fait d'une matière souple formant une espèce de soufflet.

3. Chaussure de sport selon l'une ou plusieurs des revendications précédentes, caractérisée en ce que ledit revers (13) est en cuir ou en matière équivalente présentant une certaine rigidité et consistence.

4. Chaussure de sport selon l'une ou plusieurs des revendications précédentes, caractérisée en ce que l'ouverture avant (17) pour la fixation est asymétrique par rapport au plan médian vertical.

5. Chaussure de sport selon l'une ou plusieurs des revendications précédentes, caractérisée en ce que ladite ouverture présente une partie inférieure qui est clairement dirigée vers un côté de l'article chaussant.

6. Chaussure de sport selon l'une ou plusieurs des revendications précédentes, caractérisée en ce que la semelle d'usure (20), fabriquée par injections successives de matière plastique dans un moule, a une région interne rigide (20a) et des régions périmétriques flexibles (20b).
